Europäisches Patentamt

European Patent Office

Office européen des brevets

(11) Publication number: **0 323 131**

**A1**

# EUROPEAN PATENT APPLICATION

(21) Application number: **88312167.5**

(22) Date of filing: **22.12.88**

(51) Int. Cl.⁴: **B60P 3/16**

(30) Priority: **24.12.87 GB 8730174**

(43) Date of publication of application:
**05.07.89 Bulletin 89/27**

(84) Designated Contracting States:
**AT BE CH DE ES FR GB GR IT LI LU NL SE**

(71) Applicant: **Tilcon Limited**
**Conyngham Hall Knaresborough**
**North Yorkshire HG5 9AY(GB)**

(72) Inventor: **Gallagher, Gerard Joseph**
**Flat 7, "Dunorlan" 2 Park Road**
**Harrogate North Yorkshire, HG2 9AZ(GB)**

(74) Representative: **Sparrow, Alvar Alfred et al**
**BTR Group Patent & Trade Mark Service P.O.**
**Box 504**
**Erdington Birmingham B24 9QH(GB)**

(54) **Batch-discharge delivery truck.**

(57) A batch-discharge delivery vehicle has a batch mixer (1) which is mounted tiltably and such that it is movable between positions for accepting discharge of particulate material from a holding means such as a hopper or main mixer (16) mounted on the vehicle and positions for discharging a mix batch. The batch-mixer typically has substantially a bowl or bucket shape. A preferred embodiment is in the form of a ready mix mortar delivery truck for discharging batches of specially formulated mortar.

Fig.2.

## BATCH-DISCHARGE DELIVERY TRUCK

This invention relates to a batch-discharge delivery vehicle, particularly a vehicle having means for carrying a load of particulate material and means for controlled blending and discharge of batches of particulate material.

According to the present invention there is provided a batch-discharge delivery vehicle comprising, mounted on the vehicle, holding means for containing particulate material and having at least one discharge outlet, and a tiltably-mounted batch mixer which is mounted movably between positions for accepting discharge of material from the holding means and positions for discharging a mix batch from the batch mixer.

The particulate material holding means may comprise a main mixer for particulate material and/or may comprise one or more hoppers (multi- or single-compartment) or other containers for containing material to be discharged into the batch mixer and/or the main mixer (if present). In a preferred aspect of the invention, the holding means is a main mixer of the type employed on ready mix mortar (or concrete) delivery trucks.

The batch mixer preferably has inlet means for accepting particulate material from the holding means and outlet means for discharge of contents of the batch mixer, both located in its top portion when in an upright position. The inlet/outlet means may be provided by one or more openings, which may or may not be lidded or gated. The mixer may have only one opening, which serves as both charge inlet and discharge outlet. The mixer may have a substantially completely open top or may have one opening preferable situated eccentrically of the top of the mixer, serving as both charge inlet and discharge outlet, or two openings situated eccentrically opposite at the top of the mixer, both serving as charge inlet and discharge outlet or one serving as the inlet and the other serving as the outlet. The one or more openings may have a neck portion protruding from the mixer body to facilitate the charging and discharging of material.

The batch mixer preferably is a bowl- or bucket-shaped mixer with the inlet and outlet means adjacent to or in the top end thereof. Preferably it has a curved inner surface to facilitate cleaning and pouring, and suitably it may be of dished cylindrical shape or may have a substantially U-shaped vertical cross-section.

The batch mixer may be pivotally mounted for tilting movement to orientate it for charging from the holding means and subsequently for discharging its contents. The pivot (tilt) axis preferably is at or above the centre of gravity of the mixer, but may be below that centre of gravity. The mixer may be mounted directly or indirectly on a pair of tilting trunnion pivots or on a single pivot. An example of an indirect mounting is when the mixer is rotatably mounted in a pivoted bearing ring. If desired, the vehicle may incorporate a swivel mounting for the mixer to enable the mixer to be swivelled for discharge of its contents at various directional points in relation to the vehicle.

Movement of the batch mixer between positions for accepting discharge of material from the holding means and positions for discharging its contents may be solely by virtue of tilting the mixer to appropriate orientations. When the tilt axis is eccentric of the mixer, the tilting effectively will produce movement of the centre of the mixer between higher and lower positions in relation to the vehicle. However, in accordance with a preferred embodiment of the invention, separate means are provided for moving the whole mixer. This separate means may be for movement of the mixer up and down and/or transversely in relation to the discharge outlet of the holding means. For instance, the pivoted mixer may be supported on a platform which is movably mounted in a guide frame attached to the vehicle, or it may be supported on a lever-action framework pivotally connected to the vehicle chassis, or it may be supported on a guide-rail which may be of the screw-thread, geared or pawl-and-ratchet type.

The tilting and/or the separate movement of the batch mixer may be achieved by manual/mechanical levered means, for instance by means of a pulley system which may be chain-geared, or by powered means, for instance by means of a fuel-driven engine, an electric motor or a fluid-pressure operated cylinder and piston device such as a hydraulic or pneumatic ram type device.

Conveniently, the discharge outlet of the holding means and the associated batch mixer are located at the rear of the vehicle. The batch mixer conveniently may be mounted at the rear nearside of the vehicle or between the two sides of the vehicle, to enable discharge of batch mix at the side or at the rear of the vehicle. A lateral movement means, such as a powered guide-rail, may be present for movement of the mixer between the two sides of the vehicle.

Often, the position of the batch mixer for accepting material from the holding means is higher than the desired position of the batch mixer for discharging its contents, especially when the vehicle is a ready mix mortar delivery truck. However, when the discharge outlet of the holding means is at a low level, desirable positions of the batch mixer for discharge of its contents may be higher than its charging position, for instance, when the holding means consists of one or more hoppers.

The batch mixer may also be moved to positions convenient for travel of the vehicle and to positions convenient for operations such as cleaning and maintenance.

In one preferred embodiment, the batch mixer is detachable from the vehicle, thereby enabling it to be removed from the vehicle on site for discharge of its contents at a location remote from the vehicle or for discharge while the vehicle returns to base or moves on to another location, or for cleaning or maintenance. For this purpose the batch mixer may have a lifting attachment such as one or more fork-lift channels for accommodating the fork-(s) of a fork-lift vehicle or one or more rings or hooks for lifting by a crane.

A preferred mixing means for the batch mixer comprises one or more paddled vertical shafts rotatable shaft-axially and planetarily within the mixer. Each planetary shaft may have only one paddle or, if preferred, two differently shaped paddles, one being of a substantially flat square-edged propeller shape and the other being of a substantially flat right-angle twisted L-shape with the lower leg of the L-shape pointed inwardly of the mixer when that leg is in a position nearest the inner surface of the mixer. When each planetary shaft has only one paddle, the mixing means preferably comprises also a central vertical shaft carrying one or more paddles, especially a single substantially sigmoid (S- or Z-shaped) paddle the bends and extreme edges of which continuously touch or almost touch the inner surface of the mixer during rotation and preferably the lower edge of which continuously touches or almost touches the base portion of the mixer during rotation. Suitably the planetary shafts and, if present, the central shaft are driven by a single motor with associated gearing to confer the desired rotational speeds.

A suitable alternative mixing means for the batch mixer comprises a mixing bowl which is drive-rotatable about its vertical axis and inside which there is at least one freely-rotatable paddled vertical shaft and/or at least one stationary scraper blade.

The rotation drive means for the batch mixer may be the vehicle engine, for instance via a drive-shaft, or may be a separate motor, for instance a hydraulic, pneumatic or electric motor, mounted on the vehicle.

The mixing means and/or the paddles may be separately detachable for ease of cleaning and for replacement or substitution.

The holding means for the particulate material preferably comprises or consists of a bulk main mixer, which may be powered via a drive-shaft connected to the vehicle engine or may be driven by a separate motor. Such a main mixer may be of the type employed on ready mix mortar (or concrete) delivery trucks. Indeed, the invention is especially suitable as a modification for such trucks. Such a main mixer usually has a generally cylindrical or barrel shape with a tapered or truncate-conical end portion having an opening for charging and discharging. Usually it is mounted longitudinally of the vehicle such that its opening is at the rear of the vehicle, and usually it is mounted to be at an angle to the longitudinal axis of the vehicle such that the end having the opening is higher than the other end at least when the vehicle is travelling. The mixing usually is achieved by motor-driven rotation of the mixer body about its longitudinal axis, the mixer usually having static mixing plates attached to its internal surface, but alternatively or additionally the mixing may be achieved by motor-driven rotation of a paddled mixing shaft longitudinally within the mixer.

The vehicle preferably has means for measuring and controlling the amounts of material charged into the batch mixer. For instance, the vehicle may have one or more weighing or volume-measuring devices associated with flow-control means for material being discharged from the holding means. Additionally or alternatively, the vehicle may have a load cell for measuring the quantity of material in the batch mixer, for instance a load-measuring device operatively connected to a visual read-out.

The vehicle also may have a conveyor belt, pump or other device for transferring the discharge from the batch mixer or the holding means into a site bin or directly to the end-use location. Additionally or alternatively, the vehicle may have one or more chutes, which may be movably mounted, for instance pivotally mounted, for directing the discharge outflow from the batch mixer and, if desired, from the holding means.

The vehicle suitably is road-wheeled and preferably is self-propelled. It may have as its base a conventional fuel-engined (typically petrol- or diesel-engined) truck chassis.

The invention provides a delivery vehicle which is capable of producing and discharging measured batches (i e part-loads) of material carried by the vehicle and of producing and discharging batches of freshly prepared special formulations comprising exclusively material carried by the vehicle or incorporating predetermined quantities of additional ingredients carried separately or provided on site.

Generally, the invention may be embodied in vehicles for carrying and discharging various particulate materials such as road grit, granular coal, agricultural growing media, grain, aggregates, road-surfacing material, and mortar for use in the construction industry. The particulate material may be carried or discharged in partly or fully mixed state as desired. Existing and conventionally sized delivery vehicles may be modified or adapted to incorporate a batch mixer in accordance with the invention.

The invention advantageously may be embodied in the form of a ready mix mortar delivery truck for the construction industry. Construction mortar conventionally is based on a cement and aggregate (e g sand) and typically comprises one or more additional ingredients such as those selected from hydrated lime, binders, plasticisers, set-retarders, pigments, fillers and water. The mortar may be delivered as a dry, moist or wet mix, to be discharged with or without additional ingredient(s) or processing.

The invention is particularly suitable for delivering freshly made up mortars having special characteristics and/or which are required at particular sites in quantities less than the load normally carried by a conventional mortar delivery truck. Individual mortar batches may be specially formulated on site to have required characteristics such as colour, consistency, hardness, resiliency or setting time. Also, mortars having a short pot-life (i e those which lose their desired optimum characteristics after a relatively short period of time) may be delivered in batches freshly prepared in the batch mixer to maximise their useful life.

At least the common ingredients employed in mortar mixes may be carried in the holding means of the vehicle and, if desired, less common ingredients or those required only in small quantities may be held in separate containers or packages carried by the vehicle or stored on site.

If desired, in order to assist in the preparation of the desired batch mix and/or to reduce dust hazards, fine ingredients such as pigment may be carried in water-soluble packs of known quantity for incorporation in the mix without de-packaging or may be carried and incorporated in predetermined dosage as an aqueous emulsion or dispersion.

By way of example, suitable parameters of a batch mixer for a ready mix mortar delivery truck are a mixing capacity of one-third of a cubic metre and an overall volume of one cubic metre.

The vehicle may have one of more tanks for holding water for use in preparation of the mortar, flushing-out between batches and/or washing down, and/or for carrying contaminated effluent water for disposal away from the site. If desired, one or more pumps may be present in association with the tank(s) to urge the required flow.

It will be appreciated that, if desired, particulate material may be discharged from the holding means of the vehicle directly on site, omitting passage through the batch mixer, and that the batch mixer may be employed to dispense batches of material at a required weight or volume from the holding means with or without employing the mixing action of the batch mixer. In the latter case, the mixing means may be removed from the batch mixer, if desired.

The invention is illustrated, by way of example, in the accompanying drawings. In the drawings:-

Figure 1 is a schematic representation of one form of a batch mixer suitable for use in the invention;

Figure 2 is a diagrammatic representation of the rear of a ready mix mortar delivery truck having one form of adaptation for batch discharge in accordance with the invention;

Figure 3 is a diagrammatic side-view representation of one form of hoppered batch-discharge self-propelled delivery vehicle in accordance with the invention;

Figure 4 is a diagrammatic representation of a batch mixer suitable for employment in the invention, showing one form of paddled mixing means;

Figure 5 is a diagrammatic vertical cross-section representation of a rotating bowl-type of batch mixer suitable for employment in the invention;

Figure 6 is a diagrammatic side-view representation of a ready mix mortar delivery truck having another form of adaptation for batch discharge in accordance with the invention, and

Figure 7 is a diagrammatic rear-view representation of the delivery truck of Figure 6, showing the batch mixer in two positions.

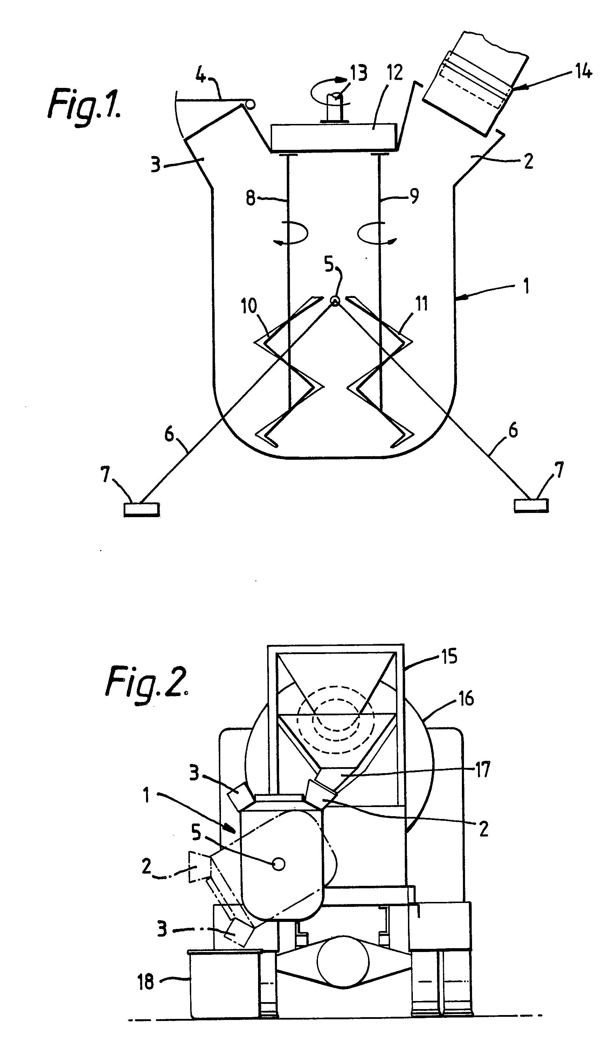

Figure 1 shows a batch mixer of uniform substantially U-shaped vertical cross-section having a charge inlet port 2 and a discharge port 3 with a hinged lid 4, the mixer being side-mounted on a pair of tilt-axis trunnion pivots one of which 5 is shown in the drawing. The trunnion pivots are carried on a framework 6 having slotted brackets 7 designed for accommodating the forks of a fork-lift truck. The trunnion pivots may rest on one or more load cells of conventional type (not shown) for controlling the weight of material discharged into the batch mixer. The mixing means comprises two rotatable shafts 8,9 carrying mixing paddles 10,11, which are connected through planetary gearing 12 to a power-input shaft 13 so that the shafts are rotatable about their own axes and planetarily of the mixer. The shafts 8,9 and/or the paddles 10,11 may be detachable from the mixer. The power-input shaft 13 may be driven by, for instance, an electric or a hydraulic motor (not shown) which may itself be demountable from the vehicle carrying the batch mixer. Also shown in the drawing is the outlet portion 14 of a discharge chute from a main mixer or hopper carried on the vehicle.

The batch mixer 1 carried in its framework 6 with brackets 7 may be mounted at the rear of a ready mix mortar delivery truck as shown in Figure 2. The batch mixer assembly is removably clamped on a platform which is capable of being raised and lowered along a structural membrane 15, such as by conventional mechanical or hydraulic means (e g as is employed in fork-lift trucks), between an elevated position at which mix may be discharged from the main mixer 16 via a chute 17 into the batch mixer 1 and a lowered position at which a mix batch may be discharged from the batch mixer nearer to ground level. Figure 2 shows the batch mixer 1 in upright and tilted positions and shows a receptacle 18 into which the mix batch may be discharged.

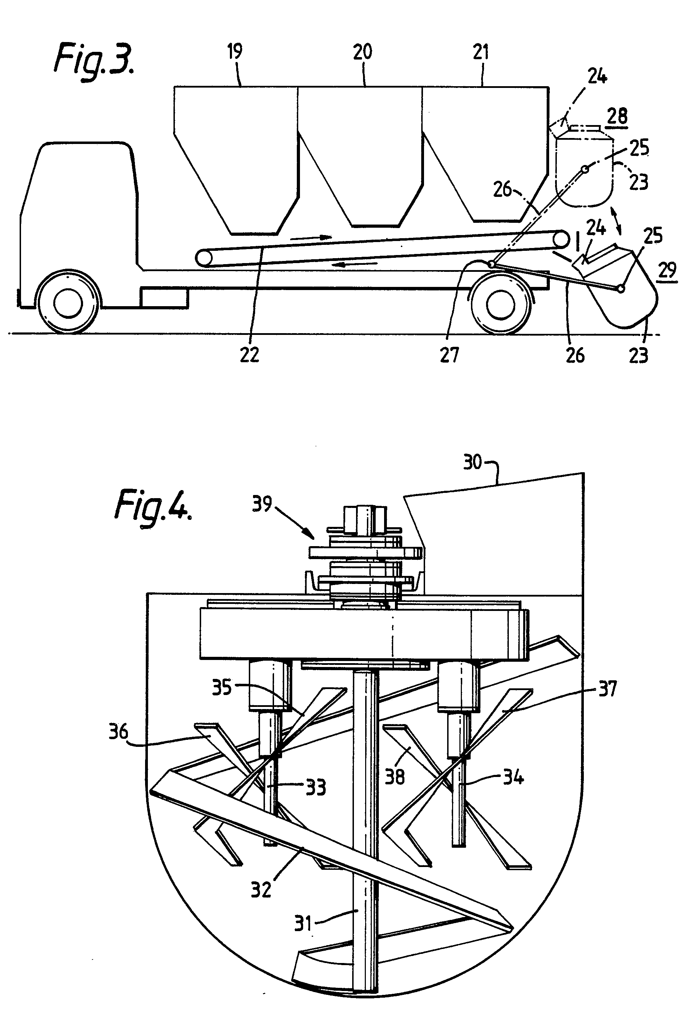

Figure 3 shows a self-propelled delivery vehicle having mounted thereon: three hoppers 19,20,21 for particulate materials, a conveyor belt 22 beneath the hopper outlets, and a batch mixer 23 having a single charge/discharge opening 24. The batch mixer 23 is side-mounted on a pair of tilt-axis trunnion pivots, one of which 25 is shown in the drawing, supported on a framework 26 which is connected to the vehicle chassis by a pivot means 27. The framework 26 carrying the batch mixer 23 is capable of being moved about the pivot means 27 by, for instance, conventional mechanical or hydraulic means (not shown) to raise or lower the batch mixer. Normally, the batch mixer will be carried in an elevated position 28 while the vehicle is travelling along a roadway. When a batch is required, the batch mixer will be lowered and tilted to a position 29 at which it is able to accept particulate material through its opening 24 from the conveyor belt 22. The particulate material is dispensed onto the conveyor belt 22 in controlled quantities from one or more of the hoppers 19,20,21 by quantity control means (not shown). Additional material, usually in a relatively small quantity, may be added to the batch mixer from a separate source (e g a package carried on the vehicle or stored on side). Discharge of a batch from the batch mixer 23 is achieved by raising or lowering the mixer to the desired height and tilting it to discharge the material through the opening 24.

Figure 4 shows a batch mixer of uniform substantially U-shaped vertical cross-section having a single charge/discharge opening 30 and mixing means comprising a central rotatable shaft 31 carrying a substantially sigmoid paddle 32 and two shaft-axially and planetarily rotatable shafts 33,34 carrying paddles 35,36,37,38, the three shafts being connected through planetary gearing 39 driven by a single motor (not shown). The shafts and/or paddles may be detachable from the mixer.

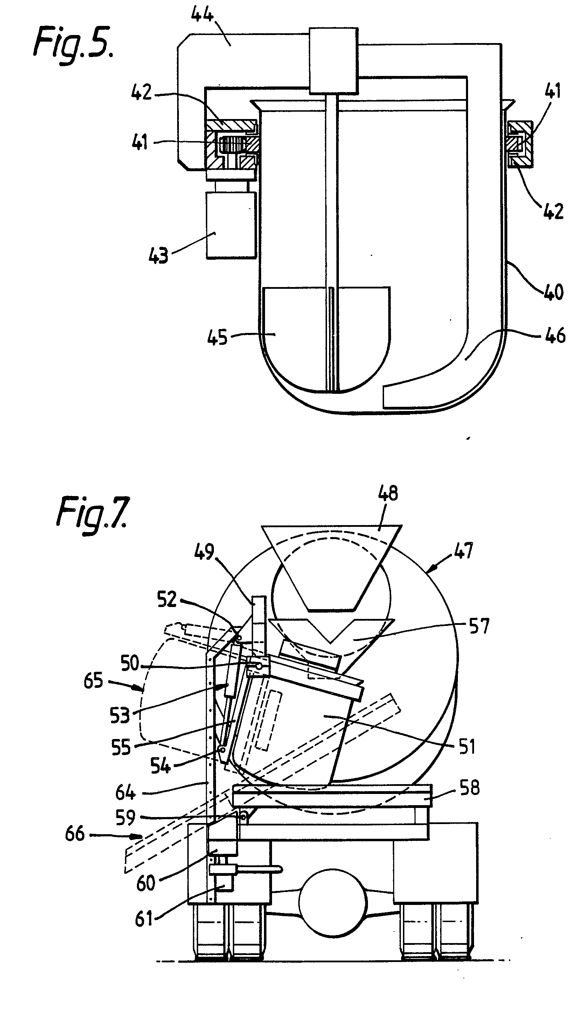

Figure 5 shows a batch mixer comprising a substantially U-shaped rotatable open-topped mixer bowl 40 having on its outer surface an annular gear ring 41 supported in a bearing ring 42 and driven by a motor 43 powered electrically, pneumatically or hydraulically. Mounted to the bearing ring 42 is a rigid arm 44 carrying a freely rotatable multi-bladed paddle 45 and a static scraper blade 46 which may be flat or spirally shaped. The scraper blade 46 may be positioned to be in sliding contact or almost in contact with the surface of the bowl 40, in which position the blade assists in emptying and cleaning of the bowl. The bearing ring 42 may be tiltably mounted on pivots (not shown).

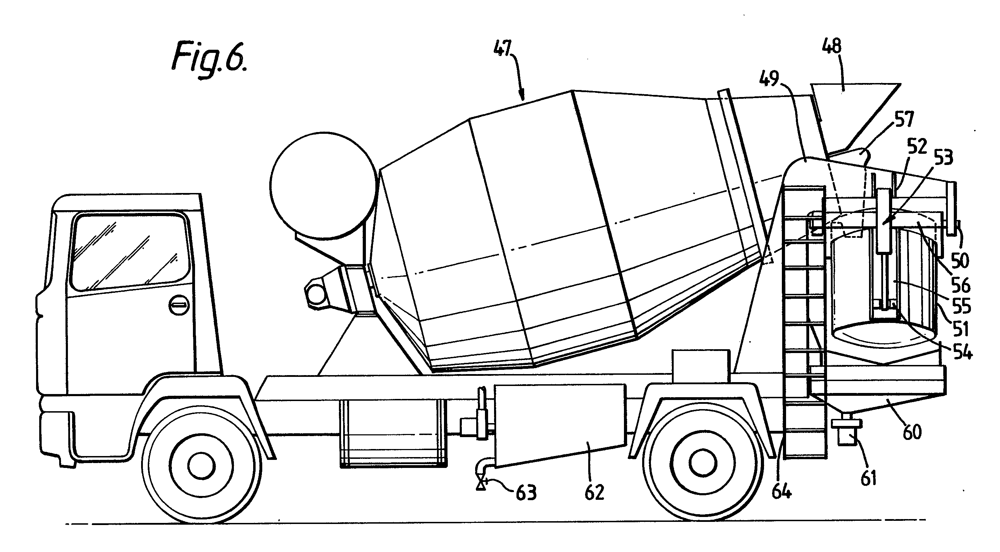

Figures 6 and 7 show a ready mix mortar delivery truck having a conventional main mixer 47 and charging chute 48. Attached to the side rear of the vehicle is a rigid substantially inverted-L shaped bracket 49 supporting by pivot means 50 a batch mixer 51 which may be of the kind described herein. Also supported on the bracket 49 by a pivot means 52 is a fluid-pressure operated cylinder and piston device 53 which is connected via a pivot means 54 to an arm 55 on a support 56 connected in fixed relationship to the batch mixer 51. The vehicle has a discharge chute 57 attached to the main mixer 47 and a telescopic discharge chute 58 connected to the vehicle by pivot or swivel means 59. The vehicle also carries a water collection sump 60 with an associated dirty-water pump 61 for batch mixer washout purposes, an effluent tank 62 having an associated effluent dump valve 63, and a ladder 64. Figure 6 shows, by continuous outline, a position of the batch mixer 51 for accepting discharge from the main mixer 47 and, by discontinuous outline, a position 65 of the batch mixer 51 and associated tilting integers suitable for discharging a batch mix from the batch mixer. Also, Figure 6 shows, by discontinuous outline 66, a telescope-extended and tilted position of the chute 58 for directing discharge outflow from the batch mixer when in discharging position 65.

The batch mixer 51 may be detachable from the fluid-pressure operated tilting mechanism, such as for cleaning, maintenance or substitution.

## Claims

1. A batch-discharge delivery vehicle comprising, mounted on the vehicle, holding means (16,19,20,21,47) for containing particulate material and having at least one discharge outlet (17,57), and a tiltably mounted batch mixer (1,23,51) which is mounted movably between positions (29,51) for accepting a charge of material from the holding means and positions (65) for discharging a mix batch from the batch mixer.

2. A vehicle according to Claim 1 wherein the holding means comprises a main mixer (16,47) and/or one or more hoppers (19,20,21).

3. A vehicle according to any of the preceding Claims wherein the batch mixer has inlet and outlet means (2,3,24,30) located at its top portion when in an upright position.

4. A vehicle according to any of the preceding Claims wherein the batch mixer is a bowl- or bucket-shaped mixer having inlet and outlet means adjacent to or in the top end thereof.

5. A vehicle according to any of the preceding Claims wherein the batch mixer is mounted such that its tilt axis is at or above its centre of gravity.

6. A vehicle according to any of the preceding Claims having, in addition to the tilt-mount for the batch mixer, separate means for moving the tiltably mounted batch mixer between charging and discharging positions.

7. A vehicle according to any of the preceding Claims wherein the batch mixer has one or more paddled shafts (10,11,33,34) rotatable shaft-axially and planetarily within it.

8. A vehicle according to any of Claims 1 to 6 wherein the batch mixer comprises a mixing bowl (40) which is drive-rotatable about its vertical axis and inside which there is located at least one freely-rotatable paddled (45) vertical shaft and/or at least one stationary scraper blade (46).

9. A vehicle according to any of the preceding Claims which is a self-propelled road-wheeled vehicle.

10. A ready mix mortar delivery vehicle comprising, mounted on the vehicle, a main mixer (16,17) for holding bulk mortar, and a tiltably mounted batch mixer (1,51) which is mounted movably between positions (51) for accepting a charge of mortar from the main mixer and positions (65) for discharging a mix batch from the batch mixer.

*Fig.1.*

*Fig.2.*

**Fig.3.**

**Fig.4.**

## Fig.5.

## Fig.7.

Fig.6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| X | GB-A-1 580 788  (BATES)<br>* page 1, line 82 - page 2, line 9;<br>figures 1,2 *<br>--- | 1,4,9 | B 60 P    3/16 |
| X | DE-A-2 812 031  (KAISER)<br>* claims 1,2; figures 3,4 *<br>--- | 1,2 | |
| A | US-A-3 456 925  (GALLAGHER)<br>--- | | |
| A | US-A-3 198 495  (MAXON)<br>----- | | |

TECHNICAL FIELDS
SEARCHED (Int. Cl.3)

B 60 P    3/00
B 28 C    5/00

The present search report has been drawn up for all claims

| Place of search | Date of completion of the search | Examiner |
|---|---|---|
| BERLIN | 10-03-1989 | LUDWIG H J |

EPO FORM 1503 03.82 (P0401)